# EUROPEAN PATENT SPECIFICATION

(11) **EP 3 980 489 B1**
(45) Date of publication and mention of the grant of the patent: **09.12.2026**
(21) Application number: 20819463.9
(22) Date of filing: 08.06.2020
(51) Int. Cl.: C08K 3/36, C08K 7/26, C08L 83/04, C08G 77/04

(54) **FLEXIBLE COMPOSITE OF POLYMER AND SILICA AEROGEL**
FLEXIBLER VERBUNDSTOFF AUS POLYMER UND KIESELSÄUREAEROGEL
COMPOSITE SOUPLE DE POLYMÈRE ET D'AÉROGEL DE SILICE

(30) Priority: 07.06.2019 US 201962858514 P
(43) Date of publication of application: 13.04.2022
(73) Proprietor: Mid-Mountain Materials, Inc., Seattle, WA 98108 (US)
(72) Inventor: KNAPP, John R., Seattle, Washington 98108 (US); DAS, Amulya, Seattle, Washington 98108 (US)
(74) Representative: J A Kemp LLP
(86) International application number: PCT/US2020/036708
(87) International publication number: WO 2020/247956

(56) References cited:
- US-A1- 2009 082 479
- US-A1- 2010 280 171
- US-B2- 7 868 083

## Description

### BACKGROUND

Current sealing and insulating methods for heating and cooking appliances utilize many forms of synthetic vitreous fibers. These fibers are primarily fiberglass, ceramic fiber, silica, and basalt. The fibers are used in textile forms such as non-wovens (paper, felt, blanket, and board). The fibers are also used in woven, knitted, and braided structures, both 2D and 3D. The textile structures can be fabrics, ropes, and tapes, (narrow textiles). These textiles are sometimes secondarily coated with organic and inorganic coatings to enhance sealing properties, elevate temperature resistance, reduce fraying, or simply to hide the seals for aesthetic/cosmetic purposes.

Even though the current materials work satisfactorily, they lack many performance characteristics, such as being 100% airtight. These materials are also likely to fray and ravel on any cut edges which provides a leakage point for the seal. The fibers generally are a workplace hazard and nuisance due to fiber fly-off, and the cause of discomfort and itchiness to the handlers of such insulation and sealing materials. The inorganic black pigmentation, such as carbon black, used in such materials is also a nuisance dust and is hazardous as it becomes airborne and is often respirable.

The non-woven materials used in insulation are typically held together by one of two methods: by using organic binders or by mechanical needling (e.g., needle felt). Organic binders are prone to burn out at low temperature, and fibers can become airborne easily, such that the gaskets, seals, and insulation materials fall apart, leading to the failure of the gasket/seal and subsequently to the failure of the larger product comprising the gasket/seal.

Temperatures in typical heating and cooking appliances surpass the working temperatures of all organic coatings such as the aforementioned binders, such as acrylic, PVC, chloroprene, silicone, PTFE, and others. Typical temperatures in the heating appliances can reach 500 to 1400 degrees F, and in the cooking appliances 500 to 700 degrees F, with the hotter limits being reached during the "self-clean" mode on cooking appliances. Such temperatures lead to eventual strength loss for the vitreous fibers, making them more brittle and likely to fracture with any movement or pressure on the material. This movement and pressure can be caused by the repeated opening and closing of doors and hatches, or simply the thermal expansion and contraction upon heating and cooling of the unit. This leads to the breakdown of the vitreous fibers and the seals, gaskets, thermal insulations over time and the loss of the original sealing or insulating efficiency that was designed into the finished product.

There is a need for materials that can withstand the high temperatures and can be incorporated into gaskets, seals, and insulation that do not suffer from the above described drawbacks.

US 2009/082479 A1 is directed to methods of preparing a fused aerogel-polymer composite in which aerogel and an organic polymer is mixed in a dry state to adsorb polymer particles on the surface of the aerogel and are then subjected to thermal treatment, thus forming a polymer coating on the aerogel.

US 2010/280171 A1 is directed to composite materials containing aerogels blended with thermoplastic polymer materials at a weight ratio of aerogel to thermoplastic polymer of less than 20:100.

US 7 868 083 B2 is concerned with a material comprising aerogel particles and a polytetrafluoroethylene (PTFE) binder.

### SUMMARY

This summary is provided to introduce a selection of concepts in a simplified form that are further described below in the Detailed Description. This summary is not intended to identify key features of the claimed subject matter, nor is it intended to be used as an aid in determining the scope of the claimed subject matter.

In one aspect, provided herein is a flexible ceramic composite comprising a polymer and silica aerogel disposed within the polymer, wherein the silica aerogel is 15% to 45% by weight of the flexible ceramic composite and the polymer is a silicone.

In some embodiments, the silica aerogel is silica aerogel particles with a diameter of 0.01 µm to 35 µm.

In some embodiments, the flexible ceramic composite is stable at a temperature of at least 300°C, at least 350°C, at least 400°C, at least 450°C, at least 550°C, at least 650°C, or at least 700°C. In some embodiments, the flexible ceramic composite has a density of 95%, 90%, 85%, 80%, 75%, 70%, 65%, 60%, 55%, 50%, 45%, or 40% of the density of the polymer. In some embodiments, wherein the flexible ceramic composite has a thermal conductivity less than 95%, less than 90%, less than 85%, less than 80%, less than 75% of the thermal conductivity of the polymer.

In some embodiments, the silica aerogel is hydrophobized silica aerogel.

In some embodiments, the flexible ceramic composite is non-fibrous.

In some embodiments, the flexible ceramic composite is in a form selected from a cast sheet, extruded profiles, molded parts, and coated fabric.

In another aspect, provided herein is an article of manufacture comprising a flexible ceramic composite of the invention.

In some embodiments, the article of manufacture is an oven or a fireplace gasket, seal, or insulating panel. In some embodiments, the article of manufacture is adapted for uses at temperatures greater than 300°C. In some embodiments, the article of manufacture has a thermal conductivity less than 95%, less than 90%, less than 85%, less than 80%, less than 75% of the thermal conductivity of the comparable article of manufacture that does not comprise the aerogel.

### DETAILED DESCRIPTION

In one aspect, the disclosure provides a flexible ceramic composite material that comprises a polymer and silica aerogel dispersed within the polymer. In some embodiments, the silica aerogel is incorporated into the polymer to produce the composite. In certain embodiments, the composite consists essentially of the polymer and the silica aerogel. In some embodiments, the composite comprises other components (fillers, colorants, etc.) in addition to the polymer and the silica aerogel.

The flexible ceramic composite disclosed herein can be formed in the following compositional variations for varying performance levels of thermal insulation properties, such as but not limited to thermal conductivity and upper temperature limits for short term and long-term exposure. They can also be altered for physical properties such as elongation; tear, tensile, and puncture strengths; compression and rebound; abrasion resistance; sound attenuation; vibration isolation; and durometer.

Loading of the aerogel into the polymer can vary depending on the desired application.

In one embodiment, the silica aerogel is greater than 20% by weight of the composite. In one embodiment, the silica aerogel is greater than 30% by weight of the composite. In one embodiment, the silica aerogel is greater than 40% by weight of the composite. In some embodiments, the original specific gravity of the polymer can be very low, allowing mass loading if other physical properties are aligned, such as viscosity and durometer.

In some embodiments, the flexible ceramic composite of the disclosure has a density of 95%, 90%, 85%, 80%, 75%, 70%, 65%, 60%, 55%, 50%, 45%, or 40% of the density of the polymer that does not comprise the silica aerogel. In some embodiments, density of the composite can be reduced, and insulation performance can be enhanced by adding a foaming agent to the polymer (or monomeric precursors of the polymer). Thus, in some embodiments, inclusion of the composites of the disclosure can allow weight reduction of the article of manufacture comprising the composite.

Suitable polymers that can be used in the compositions of the disclosure include thermoplastic polymers. In some embodiments, the flexible ceramic composite of the disclosure comprises a thermoplastic polymer, such as a polymer selected from the group consisting of a polyolefin, a polystyrene, a polyester, a polyamide, a polyether, a polyurethane, an acrylic polymer, a polyimide, a polyurea, a polypyrrole, a polythiophene, a polyaniline, an acrylic polymer, a vinyl polymer, a silicone, a fluorosilicone, a polysulfide, a polycarbonate, a copolymer thereof, and a mixture thereof. It is noted that the flexible ceramic composite of the present invention comprises at least a silicone.

In some embodiments, the composites of the disclosure are formed by blending a polymer, such as a thermoplastic polymer, with silica aerogel powder. In certain embodiments, the composites of the disclosure are formed by polymerization of a mixture comprising silica aerogel powder and one or more precursors (e.g., monomers) of the polymer. Suitable polymers and monomers useful for forming the composites include, but are not limited to polyvinylalcohol (PVA), polyacrylate, chlorosulfonated polyethylene (CSM), ethylene acrylate copolymers (AEM), epichlorhydrin (ECO), 1,4-polyisoprene-1,4-polybutadiene (IBR), silicone (Q), hydrogenated nitrile (HNBR), fluorocarbon (FKM), fluorinated silicone (FQ), Kalrez^{®}, Kapton^{®}, polytetrafluoroethylene (PTF), tetrafluoroethylene (TFE), fluorinated ethylene propylene (FEP), Fluoroelastomer (such as DuPont Viton^{™} and 3M Dyneon^{™} Flourel^{™}), and others. Again, it is noted that the flexible ceramic composite of the present invention comprises at least a silicone.

In some embodiments, polymers such as silicone that have been previously filled with fumed silica and/or other fillers such as calcium carbonate, barytes, borates, hydrated alumina, etc., can be used to be blended or filled with the silica aerogel. In some embodiments, maximum aerogel loading can be achieved with low durometers, low filled polymers, or unfilled monomers of thermoset plastics and rubbers, polymers, etc.

In some embodiments, the thermoplastic polymer is a silicone, e.g., a polymer comprising siloxane. Silicones can be also referred to as polymerized siloxanes or polysiloxanes and consist of an inorganic silicon-oxygen backbone chain (···-R₂Si-O-R₂Si-O- R₂Si-..., wherein R is an organic substituent, such as a C1-C20 alkyl or C6-C10 aryl or heteroaryl). Commonly, the organic groups are aliphatic groups, e.g., alkyl, such as methyl. In some embodiments, the R groups are aromatic groups, e.g., substituted phenyl. Silicones can be cyclic or polymeric. By varying the -Si-O- chain lengths, side groups, and crosslinking, the properties of silicones can be modified. In some embodiments, silicones include silicone resins, which are formed by branched and cage-like oligosiloxanes. In some embodiments, the polymer is a fluorosilicone. A number of silicones and their precursors are available from commercial sources.

As used herein, the term "aerogel" refers to a highly porous material of extremely low density and also encompasses any product using an aerogel as a primary constituent. Aerogels are typically prepared by forming a gel and then removing liquid from the gel while substantially retaining the gel structure. In some embodiments, aerogels comprise a matrix of silica filled with gas, e.g. air. In some embodiments, aerogels comprise air in the amount of 96% or more of an aerogel volume. In some embodiments, aerogels comprise up to 99.9% air by volume. Aerogels can have open-celled microporous or mesoporous structures. Typically, aerogels have pore sizes of less than 200 nm and surface areas of greater than 100 m²/g. Aerogels, such as silica aerogels, have low densities, e.g., from 200 mg/cm³ to 1 mg/cm³. Aerogels and aerogel sheets are commercially available from a variety of sources. In some embodiments, aerogels are silicon-based aerogels or silica aerogels.

In some embodiments, aerogels can be pulverized into aerogel powder or aerogel particles. Representative powdered aerogels having particles of sizes ranging from 0.01 µm to 500 µm can be used in the composites of the disclosure. In some embodiments, the silica aerogels have a narrow particle size distribution. In some embodiments, the silica aerogel particles have a wide particle size distribution. In some embodiments, the aerogel has a particle diameter from 1 µm to 5 µm, from 1 µm to 50 µm, or from 10 µm to 200 µm. In some embodiments, the aerogel has pore diameters of 5 nm to 200 nm (mean). In some embodiments, the aerogel has pore diameters of 10 nm (mean).

In some embodiments, the aerogels are hydrophobic or hydrophobized aerogels. A number of hydrophobic aerogels and methods of their preparation are known in the art (e.g., those descried in Anderson A.M., Carroll M.K. (2011) Hydrophobic Silica Aerogels: Review of Synthesis, Properties and Applications. In: Aegerter M., Leventis N., Koebel M. (eds) Aerogels Handbook. Advances in Sol-Gel Derived Materials and Technologies. Springer, New York, NY). Hydrophilization of aerogels (or their precursor hydrogels) can be achieved in any suitable manner, for example, by treatment of a silica aerogel with trialkylsilyl chloride such as trimethylsilyl chloride (TMS).

In some embodiments, the flexible ceramic composites of the disclosure are non-fibrous.

In some embodiments, the composites of the disclosure can be formed by mixing the aerogel (such as silica aerogel) into a precursor of the polymer (e.g., one or more monomers) and then polymerizing the precursor to form the composite as a dispersion of the silica aerogel particles in the cured polymer matrix. In certain embodiments, mechanical blending is used for the mixing. In certain embodiments, a surfactant or other dispersant is used to facilitate even dispersion of the silica aerogel particles in the polymer and reduce aggregation. In some embodiments, the mixing can be done by using a 3-roll mill, a ball mill, or high speed and high shear mixer to facilitate the mixing and maximize the loading of the aerogel in the composite.

The composites of the disclosure have certain advantageous properties compared to the thermoplastic polymer compositions that do not comprise aerogels (i.e., comparable unfilled polymers). In some embodiments, the composites provide low thermal conductivity, for example, compared to any conventional material used in the preparation of insulating panels or gaskets for heating appliances. In some embodiments, replacement of the conventional material with a composite of the disclosure allows for reduced insulation thickness at required performance levels
The flexible ceramic composites of the disclosure are stable at high temperatures. In some embodiments, the flexible ceramic composite is stable at a temperature of at least 300°C, at least 350°C, at least 400°C, at least 450°C, at least 550°C, at least 650°C, or at least 700°C. As used herein, the term "stable" means that the material does not undergo decomposition and/or retains its physical properties when exposed to a certain condition such as high temperature or pressure for a certain period of time, for example, for at least an hour, at least 10 hours, or at least 24 hours.

The composites disclosed herein have substantially lower thermal conductivity than the thermoplastic polymer compositions that do not contain aerogels or any other polymeric materials typically used for insulation purposes. Thus, in some embodiments, the composites allow for reduced insulation thickness at required performance levels. In some embodiments, the flexible ceramic composite has a thermal conductivity less than 95%, less than 90%, less than 85%, less than 80%, less than 75% of the thermal conductivity of the polymer. Any suitable methods can be used to determine thermal conductivity of the composites; for example, in some embodiments, thermal conductivity can be determined using ASTM D5334 or ASTM D5470 methods. In some embodiments, the articles of manufacture, e.g., gaskets or seals, provide sealing capacity greater than 75%, greater than 80%, greater than 85%, greater than 90%, or greater than 95% as compared to sealing capacity of a comparable article that comprises the polymer but does not comprise the silica aerogel.

The flexible ceramic composites of the disclosure have other advantages, such as but not limited to: (a) make a 100% seal with low pressure applied due to low durometer; (b) have shape memory and can rebound back to original profile; (c) can be made hydrophobic and extremely water resistant; (d) allow weight reduction; (e) provide excellent sound attenuation; (f) provide excellent vibration isolation; (g) do not fray or ravel when cut; (h) do not include any binders that can burn off; (i) can be produced in any color or made opaque; (j) do not break down with thermal expansion-heating and cooling or application of pressure. In some embodiments, the composites are smoke free and/or fire retardant.

The flexible ceramic composite of the disclosure can be produced in any form, for example, in a form selected from a cast sheet, extruded profiles, molded parts, and coated fabric.

In another aspect, the disclosure provides an article of manufacture comprising a flexible ceramic composite disclosed herein, for example, a gasket, a seal, or an insulating panel.

In some embodiments, the article of manufacture is adapted for uses at temperatures greater than 300°C, greater than 400°C, greater than 500°C, greater than 550°C, greater than 600°C, greater than 700°C, or greater than 750°C. In some embodiments, the article of manufacture is adapted for uses at temperatures from 100°C to 750°C.

In some embodiments, the article of manufacture has a thermal conductivity less than 95%, less than 90%, less than 85%, less than 80%, less than 75% of the thermal conductivity of the comparable article of manufacture that does not comprise the aerogel.

The disclosed composite materials can be used to replace all forms of seals, gaskets, and insulation of any kind in household appliances such as wall ovens, stoves, and fireplaces. Any suitable articles of manufacture can be produced using the flexible ceramic composites of the disclosure, including but not limited to door seals and gaskets, window seals and gaskets; inspection port seals and gaskets; fan and motor seals and gaskets; exhaust flange and ducting seals and gaskets; burner seals and gaskets; insulation around combustion chamber or oven in walls, floor, and ceiling; lower profile double wall oven (due to thinner insulation); enlarged oven or fireplace and viewing area requiring smaller cabinet.

The composites of the disclosure can be used in the following industries: aerospace, power generation, oil & gas, ferrous and non-ferrous metals, general industrial, mass transit/rail, automotive, battery firestopping, transportation of batteries, cargo covers, heating and cooking appliances, aircraft, and automotive.

While each of the elements of the present disclosure is described herein as containing multiple embodiments, it should be understood that, unless indicated otherwise, each of the embodiments of a given element of the present invention is capable of being used with each of the embodiments of the other elements of the present disclosure and each such use is intended to form a distinct embodiment of the present disclosure.

Any conflict between any reference cited herein and the specific teachings of this specification shall be resolved in favor of the latter. Likewise, any conflict between an art-understood definition of a word or phrase and a definition of the word or phrase as specifically taught in this specification shall be resolved in favor of the latter.

As can be appreciated from the disclosure above, the present invention has a wide variety of applications. The invention is further illustrated by the following examples, which are only illustrative and are not intended to limit the definition and scope of the invention in any way.

### EXAMPLES

The inventors discovered that mixing a certain amount of aerogel, e.g., 5%, 10%, 15%, 20%, 25%, 30% or 40%, with a polymer material significantly decreases the thermal conductivity of the polymer material (i.e., makes it a better insulator) without substantially changing certain other properties of the unmodified polymer.

The loading capacity of aerogel with silicone elastomer is very important in designing flexible ceramics composite for improving thermal insulation performance. Various Liquid Silicone Rubbers were selected based on their filler content, viscosity, color, durometer, Tensile strength and Tear resistance. Loading capacity were determined with addition of one particle size aerogel in this study.

### Preparation of exemplary composites.

Silicones and silica aerogel (JIOS Aerogel Powder, type: D-5, Particle Size distribution: 1 um to 5um) were mixed in lab by hand and then with a hand drill mixer. The same method was used to prepare the composites listed below: to 100 g part A silicone, adding 100g Part B and then mixing 10 g portions of aerogel powder at a time until the desired percentage was accomplished. After each mixing, silicone samples were cured at 350-degree F for 2-3 minutes to make sure that the silicone was curing properly.

Molding of silicone sheet was accomplished as follows. Each silicone aerogel composition was poured into a 6"x6"x3mm thick steel mold, with a Teflon sheet underneath. Then the mix was spread flat with help of a spatula, working the air bubbles out of the silicone. The top of the silicone compound was then covered with a Teflon sheet, then a flat piece of a nylon block was placed on top to flatten and spread the material to the desired mold thickness. The silicone mix was cured at 325 degrees for 30 minutes. When cured, the material was cut out of the mold, and a 4.25" circle was die cut out of the sheet for thermal testing.

Silica aerogel JIOS Aerogel Powder (type D-5) with Particle Size Distribution of 1~5 um was used in all compositions. The following silicones were used in the exemplary composites.

### Silicone 1 (BS 7562): Bluesil TCS 7562 (Elkem); Mixing Ratio: Part A: Part B: 1: 1

| Silica Aerogel % | Bluesil TCS 7562 A | Bluesil TCS 7562 B | Aerogel AP D-5 |
|---|---|---|---|
| 5% AG* | 100g | 100g | 10g |
| 10% AG* | 100g | 100g | 20g |
| 15% AG | 100g | 100g | 30g |

| | | | |
|---|---|---|---|
| *Reference example | | | |

### Silicone 2 (KE1100): KE-1100 (Shin-Etsu); Mixing Ratio: Part A: Part B: 1:1

| Silica Aerogel % | KE-1100 A | KE-1100 B | Aerogel AP D-5 |
|---|---|---|---|
| 5% AG* | 100g | 100g | 10g |
| 10% AG* | 100g | 100g | 20g |
| 15% AG | 100g | 100g | 30g |

| | | | |
|---|---|---|---|
| *Reference example | | | |

### Silicone 3: Momentive LSR 2540 (Momentive); Mixing Ratio: Part A: Part B: 1:1

| Silica Aerogel % | 2540 A | 2540 B | Aerogel AP D-5 |
|---|---|---|---|
| 5%* | n/a | n/a | n/a |
| 10%* | 30g | 30g | 6g |
| 15% | 50g | 50g | 15g |

| | | | |
|---|---|---|---|
| *Reference example | | | |

### Silicone 4: SES-22330-50 (Shin-Etsu); Mixing Ratio: Part A: Part B: 1: 1

| Silica Aerogel % | SES-22330-50 A | SES-22330-50 B | Aerogel AP D-5 |
|---|---|---|---|
| 5%* | n/a | n/a | n/a |
| 10%* | 30g | 30g | 6g |
| 15% | 30g | 30g | 9g |

| | | | |
|---|---|---|---|
| *Reference example | | | |

Composites comprising up to 50% of aerogel can be prepared in a similar manner.

To test the samples, a Bunsen burner was placed under a ring holder with thermocouple wires connecting to thermometers placed on top and bottom of each test sample, detecting the top (cold) and bottom (hot) temperatures of the test pieces obtained as described above. The temperature data is provided in Table 1.

**Table 1 Hot & Cold Face Temperature Data Under Flame with Time**

| Sample | KE1100 0% | | KE1100 10% | | KE1100 15% | | BS 7562 0% | | BS 7562 10% | | BS 7562 15% | |
|---|---|---|---|---|---|---|---|---|---|---|---|---|
| | Bottom | Top | Bottom | Top | Bottom | Top | Bottom | Top | Bottom | Top | Bottom | Top |
| Time Elapsed | | | | | | | | | | | | |
| 0:30 | 1378 | 171 | 1369 | 197 | 1522 | 156 | 1516 | 159 | 1464 | 149 | 1520 | 132 |
| 1:00 | 1398 | 315 | 1460 | 259 | 1537 | 300 | 1535 | 219 | 1600 | 255 | 1551 | 189 |
| 1:30 | 1428 | 477 | 1442 | 524 | 1563 | 422 | 1456 | 301 | 1554 | 277 | 1526 | 220 |
| 2:00 | 1416 | 556 | 1425 | 580 | 1556 | 495 | 1417 | 376 | 1393 | 309 | 1461 | 289 |
| 2:30 | 1497 | 603 | 1367 | 581 | 1424 | 525 | 1401 | 424 | 1360 | 336 | 1444 | 281 |
| 3:00 | 1448 | 609 | 1386 | 587 | 1523 | 518 | 1365 | 415 | 1355 | 358 | 1422 | 284 |
| Mean | 1428 | | 1408 | | 1521 | | 1448 | | 1454 | | 1487 | |
| Mean Cold Face | | 455 | | 455 | | 403 | | 316 | | 281 | | 233 |
| % Reduction in Temperature from "0%" | | | | 0% | | 12% | | | | 11% | | 26% |

The test results indicate that the composites with high aerogel loading are suitable candidates for higher performance flexible ceramic composite thermal insulators.

## Claims

1. A flexible ceramic composite comprising a polymer and silica aerogel disposed within the polymer, wherein the silica aerogel is 15% to 45% by weight of the flexible ceramic composite and the polymer is a silicone.

2. The flexible ceramic composite of Claim 1, wherein silica aerogel is silica aerogel particles having diameter of about 0.01 µm to about 35 µm.

3. The flexible ceramic composite of Claim 1 or 2, wherein the flexible ceramic composite is stable at a temperature of at least 300°C, at least 350°C, at least 400°C, at least 450°C, at least 550°C, at least 650°C, or at least 700°C.

4. The flexible ceramic composite of any one of Claims 1-3, wherein the flexible ceramic composite has a density of 95%, 90%, 85%, 80%, 75%, 70%, 65%, 60%, 55%, 50%, 45%, or 40% of the density of the polymer.

5. The flexible ceramic composite of any one of Claims 1-4, wherein the silica aerogel is hydrophobized silica aerogel.

6. The flexible ceramic composite of any one of Claims 1-5, wherein the flexible ceramic composite has a thermal conductivity less than 95%, less than 90%, less than 85%, less than 80%, less than 75% of the thermal conductivity of the polymer.

7. The flexible ceramic composite of any one of Claims 1-6, wherein the flexible ceramic composite is non-fibrous.

8. The flexible ceramic composite of any one of Claims 1-7, in a form selected from a cast sheet, extruded profiles, molded parts, and coated fabric.

9. An article of manufacture comprising a flexible ceramic composite of any one of the preceding claims.

10. The article of manufacture of Claim 9, wherein the article of manufacture is an oven or a fireplace gasket, seal, or insulating panel.

11. The article of manufacture of Claim 10, wherein the article of manufacture is adapted for uses at temperatures greater than 300°C.

12. The article of manufacture of any one of Claims 9-11, wherein the article of manufacture has a thermal conductivity less than 95%, less than 90%, less than 85%, less than 80%, less than 75% of the thermal conductivity of the comparable article of manufacture that does not comprise the aerogel.

## Patentansprüche

1. Flexibler Keramikverbundstoff, der ein Polymer und ein in dem Polymer angeordnetes Silica-Aerogel umfasst, wobei das Silica-Aerogel 15 bis 45 Gew.-% des flexiblen Keramikverbundstoffs ausmacht und das Polymer ein Silikon ist.

2. Flexibler Keramikverbundstoff nach Anspruch 1, wobei das Silica-Aerogel aus Silica-Aerogel-Partikeln mit einem Durchmesser von etwa 0,01 µm bis etwa 35 µm besteht.

3. Flexibler Keramikverbundstoff nach Anspruch 1 oder 2, wobei der flexible Keramikverbundstoff bei einer Temperatur von mindestens 300 °C, mindestens 350 °C, mindestens 400 °C, mindestens 450 °C, mindestens 550 °C, mindestens 650 °C oder mindestens 700 °C stabil ist.

4. Flexibler Keramikverbundstoff nach einem der Ansprüche 1 bis 3, wobei der flexible Keramikverbundstoff eine Dichte von 95 %, 90 %, 85 %, 80 %, 75 %, 70 %, 65 %, 60 %, 55 %, 50 %, 45 % oder 40 % der Dichte des Polymers aufweist.

5. Flexibler Keramikverbundstoff nach einem der Ansprüche 1 bis 4, wobei es sich bei dem Siliziumdioxid-Aerogel um ein hydrophobiertes Siliziumdioxid-Aerogel handelt.

6. Flexibler Keramikverbundstoff nach einem der Ansprüche 1 bis 5, wobei der flexible Keramikverbundstoff eine Wärmeleitfähigkeit von weniger als 95 %, weniger als 90 %, weniger als 85 %, weniger als 80 % oder weniger als 75 % der Wärmeleitfähigkeit des Polymers aufweist.

7. Flexibler Keramikverbundstoff nach einem der Ansprüche 1 bis 6, wobei der flexible Keramikverbundstoff nicht faserig ist.

8. Flexibler Keramikverbundstoff nach einem der Ansprüche 1 bis 7, in einer Form, die aus gegossenen Platten, extrudierten Profilen, Formteilen und beschichtetem Gewebe ausgewählt ist.

9. Erzeugnis, das einen flexiblen Keramikverbundstoff nach einem der vorhergehenden Ansprüche umfasst.

10. Erzeugnis nach Anspruch 9, wobei das Erzeugnis eine Dichtung, eine Abdichtung oder eine Isolierplatte für einen Ofen oder einen Kamin ist.

11. Erzeugnis nach Anspruch 10, wobei das Erzeugnis für den Einsatz bei Temperaturen von mehr als 300 °C ausgelegt ist.

12. Erzeugnis nach einem der Ansprüche 9 bis 11, wobei das Erzeugnis eine Wärmeleitfähigkeit von weniger als 95 %, weniger als 90 %, weniger als 85 %, weniger als 80 % oder weniger als 75 % der Wärmeleitfähigkeit eines vergleichbaren Erzeugnisses aufweist, das kein Aerogel umfasst.

## Revendications

1. Composite céramique souple comprenant un polymère et un aérogel de silice disposé à l'intérieur du polymère, l'aérogel de silice constituant 15 % à 45 % en poids du composite céramique souple et le polymère étant un silicone.

2. Composite céramique souple selon la revendication 1, dans lequel l'aérogel de silice est constitué de particules d'aérogel de silice présentant un diamètre d'environ 0,01 µm à environ 35 µm.

3. Composite céramique souple selon la revendication 1 ou 2, le composite céramique souple étant stable à une température d'au moins 300 °C, d'au moins 350 °C, d'au moins 400 °C, d'au moins 450 °C, d'au moins 550 °C, d'au moins 650 °C ou d'au moins 700 °C.

4. Composite céramique souple selon l'une quelconque des revendications 1 à 3, le composite céramique souple présentant une densité égale à 95 %, 90 %, 85 %, 80 %, 75 %, 70 %, 65 %, 60 %, 55 %, 50 %, 45 % ou 40 % de la densité du polymère.

5. Composite céramique souple selon l'une quelconque des revendications 1 à 4, dans lequel l'aérogel de silice est un aérogel de silice hydrophobisé.

6. Composite céramique souple selon l'une quelconque des revendications 1 à 5, le composite céramique souple présentant une conductivité thermique inférieure à 95 %, inférieure à 90 %, inférieure à 85 %, inférieure à 80 % ou inférieure à 75 % de la conductivité thermique du polymère.

7. Composite céramique souple selon l'une quelconque des revendications 1 à 6, le composite céramique souple étant non fibreux.

8. Composite céramique souple selon l'une quelconque des revendications 1 à 7, sous une forme sélectionnée parmi une feuille moulée, des profilés extrudés, des pièces moulées et un tissu enduit.

9. Article manufacturé comprenant un composite céramique souple selon l'une quelconque des revendications précédentes.

10. Article manufacturé selon la revendication 9, dans lequel l'article manufacturé est un joint, un cordon d'étanchéité ou un panneau isolant pour four ou cheminée.

11. Article manufacturé selon la revendication 10, dans lequel l'article manufacturé est adapté à des utilisations à des températures supérieures à 300 °C.

12. Article manufacturé selon l'une quelconque des revendications 9 à 11, l'article manufacturé présentant une conductivité thermique inférieure à 95 %, inférieure à 90 %, inférieure à 85 %, inférieure à 80 % ou inférieure à 75 % de la conductivité thermique de l'article manufacturé comparable ne comprenant pas d'aérogel.
